(19) 

Europäisches
Patentamt
European
Patent Office
Office européen
des brevets

(11) **EP 4 148 690 A2**

(12) **EUROPEAN PATENT APPLICATION**

(43) Date of publication:
**15.03.2023 Bulletin 2023/11**

(51) International Patent Classification (IPC):
**G06V 20/56** (2022.01)

(21) Application number: **22215359.5**

(22) Date of filing: **21.12.2022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2021 CN 202111640213
12.04.2022 CN 202210382453**

(71) Applicant: **Beijing Baidu Netcom
Science Technology Co., Ltd.
Beijing 100085 (CN)**

(72) Inventors:
 • **CHEN, Linsong
  Beijing, 100085 (CN)**

 • **WU, Haohao
  Beijing, 100085 (CN)**
 • **CAO, Zhe
  Beijing, 100085 (CN)**
 • **LU, Zhen
  Beijing, 100085 (CN)**
 • **YANG, Jianzhong
  Beijing, 100085 (CN)**
 • **ZHANG, Tongbin
  Beijing, 100085 (CN)**

(74) Representative: **Maiwald GmbH
Elisenhof
Elisenstraße 3
80335 München (DE)**

(54) **METHOD AND APPARATUS FOR GENERATING A ROAD EDGE LINE**

(57) Aspects of the present invention are directed to a method for generating a road edge line including: acquiring a road image; recognizing lane line information and a segment image of an edge line from the road image; recognizing a key point from the segment image and determining position information of the key point as key point information; and generating the road edge line according to the lane line information and the key point information.

EP 4 148 690 A2

FIG. 1

**Description**

**TECHNICAL FIELD**

The present invention relates to the technical field of artificial intelligence, and specifically to automatic driving and deep learning, in particular, to a method and an apparatus for generating a road edge line, an electronic device and a storage medium.

**BACKGROUND**

An artificial intelligence (AI) is a subject that studies how to use computers to simulate some thinking processes and intelligent acts (such as learning, reasoning, thinking, planning, etc.) of human. It has both hardware level technology and software level technology. The AI hardware technology generally includes technologies such as sensors, special AI chips, cloud computing, distributed storage, big data processing, etc. The AI software technology mainly includes computer vision technology, speech recognition technology, natural language processing technology, machine learning, deep learning, big data processing technology, knowledge graph technology and so on.

In the related art, the production of the road edge line is usually realized in the manual operation mode, or in the mode of manual operation assisted with deep learning.

**SUMMARY**

A first aspect of embodiments of the present invention provides a method for generating a road edge line, including: acquiring a road image; recognizing lane line information and a segment image of the edge line from the road image; recognizing a key point from the segment image and determining position information of the key point as key point information; and generating the road edge line according to the lane line information and the key point information.

Optionally, the lane line information includes lane line position information, and generating the road edge line according to the lane line information and the key point information includes: projecting the key point onto a lane line according to the key point information, to obtain a projection point; determining projection position information of the projection points from the lane line position information; and generating the road edge line according to the projection position information and the key point information.

Optionally, generating the road edge line according to the projection position information and the key point information includes: obtaining position transformation information by fitting according to the projection position information and the key point information; processing the lane line position information according to the position transformation information, to obtain edge line position information; and generating the road edge line according to the edge line position information.

Optionally, a deviation value between the key point information and the edge line position information, which is predicted based on the projection position information, the key point information and the position transformation information, is less than a deviation threshold.

Optionally, projecting the key point onto the lane line according to the key point information to obtain a projection point includes: vertically projecting the key point onto the lane line according to the key point information; and using a pixel point on the lane line obtained by the vertically projecting as the projection point.

Optionally, the lane line position information includes position information of pixel points on the lane line, determining projection position information of the projection points from the lane line position information includes: determining the pixel point on the lane line that matches the projection point; and using position information of the matched pixel point as the projection position information.

Optionally, recognizing the key point from the segment image includes: recognizing an image center point from the segment image, and using the image center point as the key point.

A second aspect of embodiments of the present invention provides an apparatus for generating a road edge line, including: an acquiring module, configured to acquire a road image; a first recognizing module, configured to recognize lane line information and a segment image of the edge line from the road image; a second recognizing module, configured to recognize a key point from the segment image, and determine position information of the key point as key point information; and a generating module, configured to generate the road edge line according to the lane line information and the key point information.

Optionally, the lane line information includes lane line position information, and the generating module includes: a projecting sub module, configured to project the key point onto the lane line according to the key point information to obtain a projection point; a second determining sub module, configured to determine projection position information of the projection point from the lane line position information; and a generating sub module, configured to generate the road edge line according to the projection position information and the key point information.

Optionally, the generating sub module is further configured to: fit position transformation information according to the projection position information and the key point information; process the lane line position information according to the position transformation information, to obtain edge line position information; and generate the road edge line according to the edge line position information.

Optionally, a deviation value between the key point information and the edge line position information, which is predicted based on the projection position information, the key point information and the position transformation information, is less than a set deviation threshold.

Optionally, the projecting sub module is further configured to: vertically project the key point onto the lane line according to the key point information; and use a pixel point on the lane line obtained by the vertically projecting as the projection point.

Optionally, the lane line position information includes position information of pixel points on the lane line, and the second determining sub module is further configured to: determine the pixel point on the lane line that matches the projection point; and use position information of the matched pixel point as the projection position information.

Optionally, the second recognizing module is further configured to: recognize an image center point from the segment image, and use the image center point as the key point.

A third aspect of embodiments of the present invention provides a computer readable storage medium, storing computer instructions that cause the computer to implement the method of the first aspect of embodiments of the present invention.

It should be understood that the content described in this part is not intended to identify the key or important features of the embodiments of the disclosure, nor to limit the scope of the disclosure. The other features of the present invention will be readily understood from the following description.

## BRIEF DESCRIPTION OF THE DRAWINGS

The drawings are used to better understand the scheme of the present invention and do not constitute a limitation thereof, in which:

Fig. 1 is a schematic diagram according to a first embodiment of the present invention;
Fig. 2 is a schematic diagram of lane line extraction in the embodiment of the present invention;
Fig. 3 is a schematic diagram of edge line key point extraction result in the embodiment of the present invention;
Fig. 4 is a schematic diagram according to a second embodiment of the present invention;
Fig. 5 is a schematic diagram of edge line fitting generation in the embodiment of the present invention;
Fig. 6 is a schematic diagram according to a third embodiment of the present invention;
Fig. 7 is a schematic diagram according to a fourth embodiment of the present invention;
Fig. 8 is a schematic diagram according to a fifth embodiment of the present invention; and
Fig. 9 illustrates a block diagram of an electronic device that can be used to implement the method for generating a road edge line of the embodiment of the present invention.

## DETAILED DESCRIPTION

Embodiments of the present invention will be described below in conjunction with the drawings, including various details of the embodiments of the present invention to facilitate understanding, which should be considered merely exemplary. Therefore, those of ordinary skill in the art should notice that various changes and modifications can be made to the embodiments described herein without departing from the scope of the present invention. Similarly, for the sake of clarity and conciseness, descriptions of well-known functions and structures are omitted from the following description.

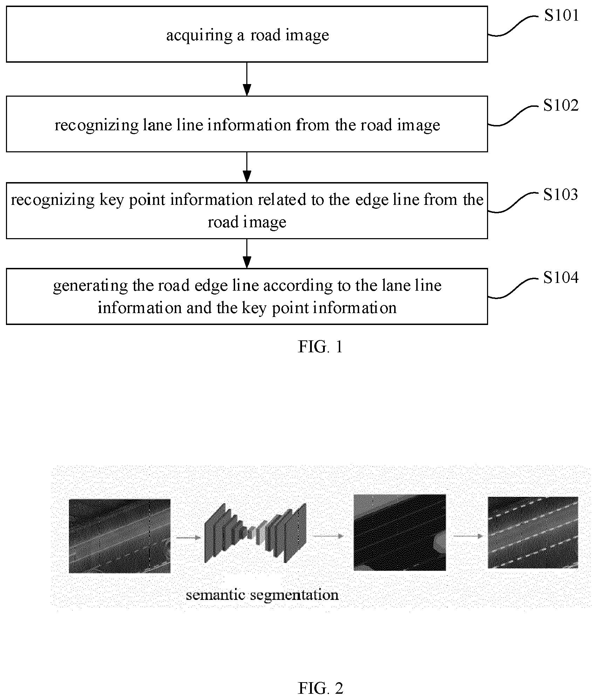

Fig. 1 is a schematic diagram according to a first embodiment of the present invention.

It should be noted that the main body of a method for generating a road edge line of the embodiment is a road edge line generating device, which may be implemented by software and/or hardware. The device can be configured in an electronic device, which may include but not limited to a terminal, a server, etc.

The embodiment of the present invention relates to the technical field of artificial intelligence, and specifically to automatic driving and deep learning.

An artificial intelligence (AI) is a new technology subject to study and develop the theory, method, technic and application system for simulating, extending and expanding human intelligence.

An automatic driving is the technology that uses radar, laser, ultrasonic, global positioning system (GPS), odometer, computer vision and other technologies to sense surrounding environment of a vehicle, recognizes obstacles and various signs through advanced calculation and control system, and plans appropriate paths to control vehicle driving.

A deep learning is to learn the internal law and representation level of sample data. The information obtained in the learning processing is very helpful to the interpretation of data such as text, image and sound. The final goal of the deep learning is to enable a machine to have the same analytical learning ability as human, and to recognize text, images, sounds and other data.

As illustrated in Fig. 1, the method for generating a road edge line includes the following steps:

In S 101, a road image is acquired. The road image is the image containing the road and its background in the scene. For example, the road image may be a real-time captured road image, or a collected highway image, etc., which is not limited.

In the embodiment of the present invention, when acquiring the road image, an image acquiring device may be configured on a road edge line generating device in advance, and a road image or the like in the scene may be acquired as the road image via the image acquiring device.

In other embodiments, the road image in the scene may also be acquired by a high-precision image acquisition vehicle, and a data transmission interface can be configured on the road edge line generating device to receive the road image acquired by the high-precision image acquisition vehicle via the data transmission interface, or the road image transmitted by other electronic devices via the data transmission interface. This is not limited.

In S102, lane line information is recognized from the road image. The lane line information refers to marking lines distributed in the center of the road to indicate the vehicle driving. The lane line information refers to the position information and data information of the lane line in the actual scene.

For example, the position information of the lane line may be, for example, the starting coordinate information and the longitude and latitude positioning information of the lane line, and the data information of the lane line may be, for example, the length data information and the shape data information of the lane line. The lane line information may be any other information that may be used to position the lane line, which is not limited.

In the embodiment of the present invention, when the lane line information is recognized from the road image, the road image may be input into a semantic segmentation model for processing, and the lane line in the road image may be edge detected and instance segmented by using the semantic segmentation model, so as to obtain the data output result of the semantic segmentation model as the lane line information recognized from the road image.

For example, as illustrated in Fig. 2, which is a schematic diagram of lane line extraction in the embodiment of the present invention, the acquired road image may be input into the semantic segmentation model, and the road image is processed with semantic segmentation to obtain lane line information in the road image.

In other embodiments, an edge detection algorithm may be applied to perform edge detection processing on the road image, the lane lines in the road image is manually labeled, the labeled road image is used as a learning sample to train a deep learning model, then multiple road images are respectively performed with the edge detection to extract the lane line information in the road image, and then the lane line information extracted from the multiple road images is mosaicked and synthesized using mosaic and synthesis strategies, to obtain the completed road lane line information as the lane line information recognized from the road images. The lane line information may be recognized from the road image in any other possible way, which is not limited.

In S103, key point information related to the edge line is recognized from the road image. The edge line is used to describe the boundary position information of the road, and the key point information related to the edge line refers to the key coordinate point information that can be used to locate the position of the edge line.

In the embodiment of the present invention, when the key point information related to the edge line is recognized from the road image, the road image may be processed using the deep learning model, to obtain the edge line segment information output by the deep learning model, and then center point information of the edge line segment may be selected as the key point information related to the edge line.

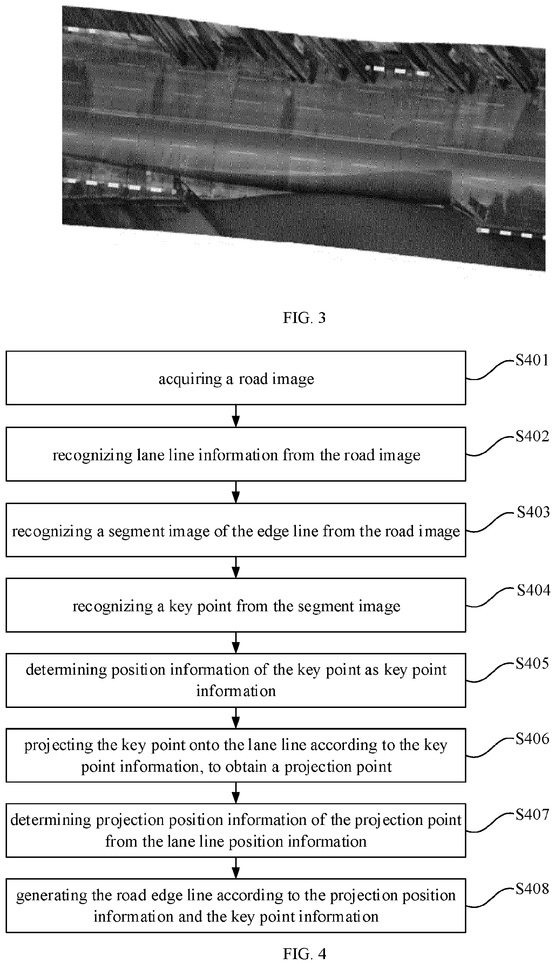

For example, as illustrated in Fig. 3, which is a schematic diagram of edge line key point extraction result in the embodiment of the present invention, after the road image is processed by the deep learning model, the road image labeled with the road edge line segments is obtained. The dotted line in Fig. 3 is the extracted edge line segments, and then the center point information of the edge line is selected as the key point information related to the edge line.

In other embodiments, the deep learning model may be used to process the road image, and the output result of the deep learning model may be performed with data pre-processing operations, such as data cleaning, to filter the effective edge line segment information in the output result, and then the center point information of the edge line segment may be selected as the key point information related to the edge line. The key point information related to the edge line may be recognized from the road image in any other possible way, which is not limited.

In S 104, the road edge line is generated according to the lane line information and the key point information.

In the embodiment of the present invention, after the lane line information is recognized from the road image and the key point information related to the edge line is recognized from the road image, the road edge line may be generated according to the lane line information and the key point information.

In the embodiment of the present invention, when the road edge line is generated according to the lane line information and the key point information, the edge line may be fitted based on the shape information of the lane line and the key point information related to the edge line. The edge line of key points in an approximate path is calculated using an optimization algorithm, so that the distance between the key points and the edge line obtained by the fitting processing is minimal, then the edge line obtained by the fitting processing can be used as the generated road edge line.

In the embodiment of the present invention, when the road edge line is generated according to the lane line information and the key point information, the edge line obtained by the fitting processing may be adjusted several times based on the key point information, and an average distance from the key points to the fitting edge line is calculated after each adjustment, and the fitting edge line with the minimum average distance is selected as the final generated road edge line information.

In the embodiment of the present invention, through acquiring a road image, recognizing lane line information from the road image, recognizing key point information related to the edge line from the road image, generating the road edge line according to the lane line information and the key point information, the lane line information and the key point information related to the edge line can be combined to recognize and generate the road edge line, the generation error of the road edge line is reduced, and the generation efficiency and the recognition and generation effects of the road edge line are effectively improved.

Fig. 4 is a schematic diagram according to a second embodiment of the present invention.

As illustrated in Fig. 4, the method for generating including the following steps:

In S401, a road image is acquired. The description of S401 can be exemplified in the above embodiment, and will not be repeated here.

In S402, lane line information is recognized from the road image. The lane line information includes lane line position information. The lane line position information refers to the information that can be used to position the lane line. The lane line position information may be, for example, the starting point coordinate information of the lane line and the longitude and latitude information of the lane line. This is not limited.

In S403, a segment image of the edge line is recognized from the road image.

In the embodiment of the present invention, after the road image is acquired, the segment image of the edge line can be recognized from the road image.

In the embodiment of the present invention, when the segment image of the edge line is recognized from the road image, the road image may be edge line recognized using a deep learning model. There may be noise data information such as trees and obstacles in the road image, the recognition processing result of the deep learning model may be data cleaned, and the noise data in the edge line recognition result can be filtered out, to recognize the segment image in the edge line.

In other embodiments, the edge line recognition result output from the deep learning model may be segmented to obtain the segment image of the edge line recognized from the road image, or the segment image of the edge line may be recognized from the road image in any other possible manner, which is not limited.

In S404, a key point is recognized from the segment image.

In the embodiment of the present invention, after the segment image of the edge line is recognized from the road image, the key point may be recognized from the segment image.

In the embodiment of the present invention, when the key point is recognized from the segment image, a position coordinate point that can identify the edge line position information in the segment image may be extracted, and the extracted position coordinate point may be used as the key point recognized from the segment image.

Optionally, in some embodiments, when the key point is recognized from the segment image, an image center point may be recognized from the segment image, and the image center point may be used as the key point, so that the image center point of the segment image may be selected as the key point. Since the image center point is located in the middle area of the recognition result, it is less affected by the noise data, the position information of the edge line may be accurately located, which assists in improving the effect of recognizing edge line in road image.

In the embodiment of the present invention, when the key point is recognized from the segment image, the image center points of multiple segment images may be recognized using an image processing algorithm, and the recognized image center point is used as key point.

In the embodiment of the present invention, after the image center point is recognized as the key point from the segment image, the key point information of the key point may be determined. The key point information may be used to assist in generating the road edge line, the details of which can be seen in the following embodiments.

In S405, position information of the key point is determined as key point information. The position information of the key point may be the longitude and latitude coordinate information of the key point, which is used to locate the specific position information of the key point in the map.

In the embodiment of the present invention, after the image center point is recognized as the key point from the segment image, longitude and latitude coordinate information of the key point may be acquired, and the acquired longitude and latitude coordinates may be stored in the form of matrix, then the longitude and latitude coordinate information is the position information of the key point. That is, the longitude and latitude coordinate information may be used as the key point information.

In the embodiment of the present invention, through recognizing the segment image of the edge line from the road image, recognizing the key point from the segment image and determining position information of the key point as key point information, the influence of obstacles in the road image on the recognition of the road edge line can be avoided, and the accuracy of the key point selection is effectively improved, effectively improving the accuracy of road edge line generation.

In S406, the key point is projected onto the lane line according to the key point information, to obtain a projection point.

In the embodiment of the present invention, after the key point is recognized from the segment image, the key point may be projected onto the lane line according to the key point information to obtain the projection point.

In the embodiment of the present invention, when the key point is projected onto the lane line according to the key point information, the lane line may be processed with vertical projection segmentation based on the key point information, so as to obtain a plurality of vertical segmentation points on the vertical alignment positions of the lane line, and the vertical segmentation point is used as the projection point on the corresponding position of the lane line.

In S407, projection position information of the projection points is determined from the lane line position information. The projection position information is used to describe the location positioning information of the projection point on the lane line. The projection position information of the projection point may be the longitude and latitude coordinate information of the projection point. The lane line information is the lane line position information, which refers to the position information that can be used to position the lane line. The lane line position information may be, for example, the starting point coordinate information of the lane line and the longitude and latitude information of the lane line. This is not limited.

In the embodiment of the present invention, when the projection position information of the projection point is determined from the lane line position information, the longitude and latitude coordinates of the projection point may be acquired, and the acquired longitude and latitude coordinates of the projection point may be used as the projection position information of the projection point.

In S408, the road edge line is generated according to the projection position information and the key point information.

In the embodiment of the present invention, after the position information of the key point is determined as the key point information, and the projection position information of the projection point is determined from the lane line position information, the road edge line may be generated according to the projection position information and the key point information.

In the embodiment of the present invention, when the road edge line is generated according to the projection position information and the key point information, a fitting generation processing of the edge line may be performed according to the projection position information and the key point information. The projection position information may be stored in the form of matrix to obtain a projection position information matrix, and the projection position information matrix is linearly transformed using a linear transformation matrix to obtain a projection position information matrix after the transformation processing, and the road edge line is generated by fitting processing according to the projection position information matrix after the transformation processing.

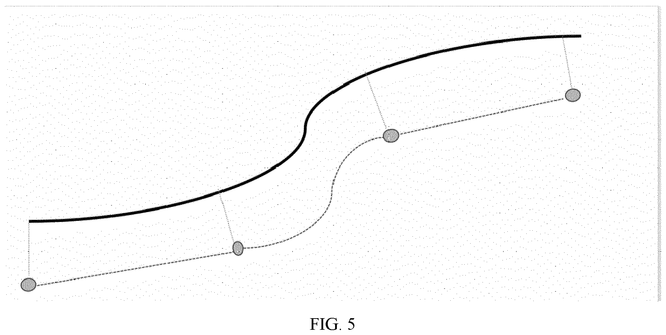

For example, as illustrated in Fig. 5, which is a schematic diagram of edge line fitting generation in the embodiment of the present invention. The black line in the figure is the lane line extracted from the road image, and the marking point represents the key point extracted from the road image. After recognizing the key point from the segment image, the position information of the key point may be determined as the key point information, and the key point is projected onto the lane line according to the key point information to obtain the projection point, then the fitting processing of the road edge line is performed according to the projection position information of the projection point and the key point information of the key point to generate the road edge line. The dotted line in the figure can be the generated road edge line.

In this embodiment, through projecting the key point onto the lane line according to the key point information to obtain the projection point, determining the projection position information of the projection point from the lane line position information, and generating the road edge line according to the projection position information and the key point information, the more accurate lane line recognition result extracted by the deep learning model can be used to generate the road edge line in combination with the key point information, avoiding the obstacles in the road image from affecting the recognition effect of the road edge line of the deep learning model, effectively improving the accuracy of the generated road edge line and improving the recognition processing effect of the road edge line.

In this embodiment, through recognizing the segment image of the edge line from the road image, recognizing the key point from the segment image, and determining the position information of the key point as the key point information, the influence of obstacles in the road image on the recognition of the road edge line can be avoided, and the accuracy of the key point selection is effectively improved, effectively improving the accuracy of road edge line generation; and through projecting the key point onto the lane line according to the key point information to obtain the projection point, determining the projection position information of the projection point from the lane line position information, and generating the road edge line according to the projection position information and the key point information, the more accurate lane line recognition result extracted by the deep learning model can be used to generate the road edge line in combination with the key point information, avoiding the obstacles in the road image from affecting the recognition effect of the road edge line of the deep learning model, effectively improving the accuracy of the generated road edge line and improving the recognition processing effect of the road edge line.

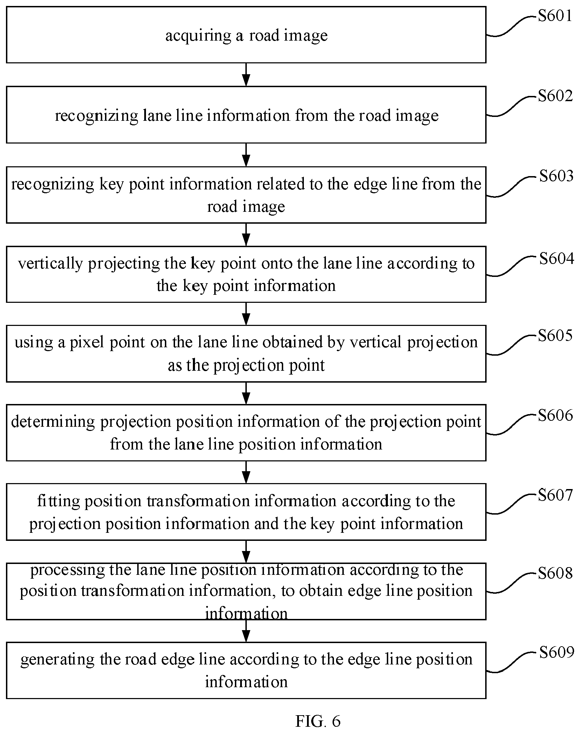

Fig. 6 is a schematic diagram according to a third embodiment of the present invention.

As illustrated in Fig. 6, the method for generating a road edge line includes the following steps:

In S601, a road image is acquired.

In S602, lane line information is recognized from the road image.

In S603, key point information related to the edge line is recognized from the road image.

The description of S601-S603 can be exemplified in the above embodiment, and will not be repeated here.

In S604, the key point is vertically projected onto the lane line according to the key point information.

In the embodiment of the present invention, after the key point information related to the edge line is recognized from the road image, the key point may be vertically projected onto the lane line according to the key point information. The key point may be vertically projected onto the lane line according to the key point coordinate information in the key point information, so as to obtain projection point of the key point on the corresponding position of the lane line.

In S605, a pixel point on the lane line obtained by the vertically projecting is used as the projection point.

In the embodiment of the present invention, after the key point is vertically projected onto the lane line, the pixel point vertically projected onto the corresponding position of the lane line may be selected, and the selected pixel point on the vertical corresponding position of the lane line may be used as the projection point.

In this embodiment, through vertically projecting the key point onto the lane line according to the key point information, and using the pixel point on the lane line obtained by the vertically projecting as the projection point, the pixel point on the vertical corresponding position of the lane line can be selected as the projection point via the vertical projection processing, obtaining a more accurate projection point, and the projection position information of the projection point can be used to assist in generating the road edge line, and thus assist to improve the recognition processing effect of the road edge line.

In S606, projection position information of the projection points is determined from the lane line position information.

Optionally, in some embodiments, the lane line position information includes the position information of pixel points on the lane line. When the projection position information of the projection point is determined from the lane line position information, the pixel point on the lane line that matches the projection point may be determined, and the position information of the matched pixel point may be used as the projection position information, so that the position information of pixel points that that matches the projection point can be acquired as the projection position information, achieving more accurate positioning processing of the projection point, the projection position information of the projection point can be used to generate road edge lines in combination with the key point information, effectively improving the accuracy of the generated road edge line.

The lane line position information includes the position information of pixel points on the lane line, which may be position coordinate information of pixel points.

In the embodiment of the present invention, when the projection position information of the projection point is determined from the lane line position information, the pixel point on the lane line that matches the projection point may be determined, then the coordinate position information of the pixel point on the lane line that matches the projection point may be determined, and the acquired coordinate position information may be used as the projection position information.

In S607, position transformation information is obtained by fitting according to the projection position information and the key point information. The position transformation information refers to data information for performing data transformation processing on the lane line position information. The data transformation processing may be, for example, a linear transformation processing, and the position transformation information may be, for example, a linear transformation matrix.

In the embodiment of the present invention, when the position transformation information is fitted according to the projection position information and the key point information, the longitude and latitude coordinates of the projections point in the projection position information may be stored in the form of data matrix, to obtain a projection point position information matrix; the position coordinate information of the key point in the key point information may be stored in the form of matrix, to obtain a key point position information matrix; then a linear transformation matrix may be defined; the linear transformation matrix and the projection point position information matrix may be multiplied to obtain a matrix after the linear transformation processing; the matrix after the linear transformation processing may be used as an edge line calculated by fitting; the average distance from the key points to the edge line calculated by fitting may be calculated; then the linear transformation matrix may be data modified; then the edge line calculated by fitting is position adjusted; for the adjusted edge line, the average distance from the key point to the edge line calculated by fitting is recalculated; and the linear transformation matrix corresponding to the edge line with the minimum average distance is selected as the position transformation information obtained by fitting.

For example, if there are 4 key points on the edge line, correspondingly, the vertical projection processing may be performed on the lane line according to the key point information, 4 projection points on the vertical corresponding positions of the lane line may be selected; the projection position information may be stored as the projection position information matrix,

$$K = \begin{bmatrix} k_{11} & k_{12} & k_{13} & k_{14} \\ k_{21} & k_{22} & k_{23} & k_{24} \end{bmatrix},$$

where each column in the projection position information matrix represents the longitude and latitude coordinates of a projection point; the key point position coordinate information is stored as the key point position information matrix,

$$X = \begin{bmatrix} x_{11} & x_{12} & x_{13} & x_{14} \\ x_{21} & x_{22} & x_{23} & x_{24} \end{bmatrix},$$

where each column in the key point position information matrix represents the longitude and latitude coordinates of a key point; a linear transformation matrix may be defined,

$$A = \begin{bmatrix} a & b \\ c & d \end{bmatrix},$$

where (a, b, c, d) are the four element values of the transformation matrix A; the key point position information matrix is processed using the linear transformation formula,

$$B = AX,$$

to obtain the edge line calculated by fitting; then the average distance from the key points to the edge line calculated by fitting may be calculated, the square distance calculation formula is

$$d(k_i, B)^2 = (k_{1i} - (ax_{1i} + b_{2i}))^2 + (k_{2i} - (cx_{1i} + d_{2i}))^2,$$

the derivatives of respective elements a, b, c and d may be obtained by using the derivation rule of multivariate function, let the derivatives be equal to 0, and the values of four elements a, b, c and d of matrix A are calculated; and the minimum average distance from four key points of the edge line to B may be obtained, the minimum average distance calculation formula is

$$\min S = \frac{1}{4} \sum_{i=1}^{4} d(k_i, B)^2,$$

at this time, the matrix A corresponding to the minimum average distance may be used as the position transformation information obtained by fitting.

In S608, the lane line position information is processed according to the position transformation information, to obtain edge line position information. The edge line position information may be used to locate the specific position information of the edge line, and the edge line position information may be expressed and stored in the form of the edge line position information matrix.

In the embodiment of the present invention, when the lane line position information is processed according to the position transformation information, the linear transformation processing on the projection point position information in the lane line position information may be performed by using the transformation matrix in the position transformation information, to obtain the matrix after the transformation processing, which is the edge line position information matrix, and the edge line position information matrix may be used as edge line position information.

In S609, the road edge line is generated according to the edge line position information.

In the embodiment of the present invention, after the lane line position information is processed according to the position transformation information to obtain edge line position information, the road edge line may be generated according to the edge line position information.

In the embodiment of the present invention, when the road edge line is generated according to the edge line position information, the road edge line may be obtained based on the fitting processing of the edge line position information matrix, and the road edge line may be drawn in the map.

In this embodiment, through obtaining position transformation information by fitting according to the projection position information and the key point information, processing the lane line position information according to the position transformation information to obtain edge line position information, and generating the road edge line according to the edge line position information, the lane line position information can be processed according to the position transformation information to generate a road edge line. Since the position transformation information can minimize the average distance between the key point and the fitting edge line, the fitting degree of the road edge line can be greatly improved, and the recognition and generation effects of the road edge line can be effectively improved.

Optionally, in some embodiments, the deviation value between the key point information and the edge line position information, which is predicted based on the projection position information, the key point information and the position transformation information, is less than a set deviation threshold, so that the error control between the key point information and the edge line position information can be realized, and the error between the road edge line generated by fitting and the edge line key point can be reduced to a large extent, ensuring that the generated road edge line can reflect the real road edge line, and improving the practicability of the generated road edge line in the scene.

The deviation value between the key point information and the edge line position information may be represented by the average distance between the longitude and latitude coordinates of the key point and the edge line calculated by fitting. The set deviation threshold may be a numerical threshold set in advance for the average distance between the longitude and latitude coordinates of the key point and the edge line calculated by fitting, and used to verify whether the road edge line corresponding to the average distance meets the fitting degree requirement.

In the embodiment of the present invention, the deviation between the generated road edge line and the key point may be controlled by using the average distance between the longitude and latitude coordinates of the key point and the edge line calculated by fitting. If the calculated average distance is less than the set value threshold, it indicates that the deviation value between the key point information and the edge line position information, which is predicted based on the projection position information, the key point information and the position transformation information, is less than the set deviation threshold.

In this embodiment, through vertically projecting the key point onto the lane line according to the key point information, and using the pixel point on the lane line obtained by the vertically projecting as the projection point, the pixel point on the vertical corresponding position of the lane line can be selected as the projection point via the vertical projection processing, obtaining a more accurate projection point, and the projection position information of the projection point can be used to assist in generating the road edge line, and thus assist to improve the recognition processing effect of the road edge line; through obtaining position transformation information by fitting according to the projection position information and the key point information, processing the lane line position information according to the position transformation information to obtain edge line position information, and generating the road edge line according to the edge line position information, the lane line position information can be processed according to the position transformation information to generate a road edge line. Since the position transformation information can minimize the average distance between the key point and the fitting edge line, the fitting degree of the road edge line can be greatly improved, and the recognition and generation effects of the road edge line can be effectively improved.

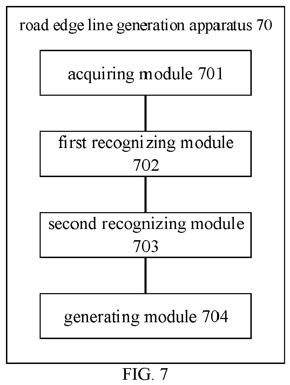

Fig. 7 is a schematic diagram according to a fourth embodiment of the present invention.

As illustrated in Fig. 7, a road edge line generation apparatus 70 includes: an acquiring module 701, configured to acquire a road image; a first recognizing module 702, configured to recognize lane line information from the road image; a second recognizing module 703, configured to recognize key point information related to the edge line from the road image; and a generating module 704, configured to generate the road edge line according to the lane line information and the key point information.

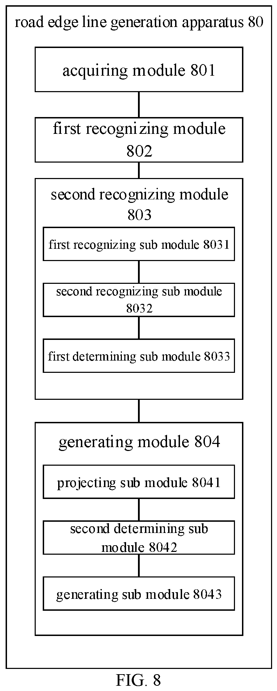

In some embodiments of the present invention, as illustrated in Fig. 8, which is a schematic diagram according to a fifth embodiment of the present invention, a road edge line generation apparatus 80 includes an acquiring module 801, a first recognizing module 802, a second recognizing module 803 and a generating module 804.

The second recognizing module 803 includes: a first recognizing sub module 8031, configured to recognize the segment image of the edge line from the road image; a second recognizing sub module 8032, configured to recognize a key point from the segment image; and a first determining sub module 8033, configured to determine the position information of the key point as the key point information.

In some embodiments of the present invention, the lane line information includes lane line position information. The generating module 804 includes: a projecting sub module 8041, configured to project the key point onto the lane line according to the key point information to obtain a projection point; a second determining sub module 8042, configured to determine projection position information of the projection point from the lane line position information; and a generating sub module 8043, configured to generate the road edge line according to the projection position information and the key point information.

In some embodiments of the present invention, the generating sub module 8043 is further configured to: fit position transformation information according to the projection position information and the key point information; process the lane line position information according to the position transformation information, to obtain edge line position information; and generate the road edge line according to the edge line position information.

In some embodiments of the present invention, a deviation value between the key point information and the edge line position information, which is predicted based on the projection position information, the key point information and the position transformation information, is less than a set deviation threshold.

In some embodiments of the present invention, the projecting sub module 8041 is further configured to vertically project the key point onto the lane line according to the key point information, and use a pixel point on the lane line obtained by the vertically projecting as the projection point.

In some embodiments of the present invention, the lane line position information includes position information of pixel points on the lane line. The second determining sub module 8042 is further configured to determine the pixel point on the lane line that matches the projection point, and use position information of the matched pixel point as the projection position information.

In some embodiments of the present invention, the second recognizing module 803 is further configured to recognize an image center point from the segment image, and use the image center point as the key point.

It can be understood that the road edge line generation apparatus 80 in this embodiment and illustrated in Fig. 8 may have the same function and structure as the road edge line generation apparatus 70 in the above embodiment, the acquiring module 801 may have the same function and structure as the acquiring module 701 in the above embodiment, the first recognizing module 802 may have the same function and structure as the first recognizing module 702 in the above embodiment, the second recognizing module 803 may have the same function and structure as the second recognizing module 703 in the above embodiment, the generating module 804 may have the same function and structure as the generating module 704 in the above embodiment.

It should be noted that the foregoing explanation of the method for generating a road edge line is also applicable to the road edge line generation apparatus of this embodiment, and will not be repeated here.

In this embodiment, through acquiring the road image, recognizing lane line information from the road image, recognizing key point information related to the edge line from the road image, and generating the road edge line according to the lane line information and the key point information, the lane line information and the key point information related to the edge line can be combined to recognize and generate the road edge line, the generation error of the road edge line is reduced, and the generation efficiency and the recognition and generation effects of the road edge line are effectively improved.

According to the embodiments of the present invention, the present invention also provides an electronic device, a readable storage medium and a computer program product.

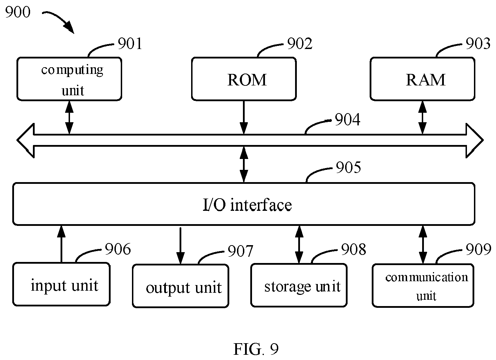

Fig. 9 illustrates a block diagram of an electronic device 900 that can used to implement embodiments of the present invention. The electronic device is intended to represent various forms of digital computers, such as laptop computer, desktop computer, workstation, personal digital assistant, server, blade server, mainframe computer, and other suitable computers. The electronic device may also represent various forms of mobile devices, such as personal digital processing, cellular phone, smart phone, wearable device, and other similar computing device. The components shown herein, their connection and relationship, and their function are merely examples and are not intended to limit the implementation of the present invention described and / or required herein.

As illustrated in Fig. 9, the device 900 includes a computing unit 901, that may perform various appropriate actions and processing according to a computer program stored in a read-only memory (ROM) 902 or a computer program loaded from a storage unit 908 into a random access memory (RAM) 903. Various programs and data necessary for the operation of the device 900 may also be stored in the RAM 903. The computing unit 901, ROM 902, and RAM 903 are connected to each other through a bus 904. An input/output (I/O) interface 905 is also connected to the bus 904.

A plurality of components in the device 900 are connected to the I/O interface 905, including: an input unit 906, such as a keyboard, a mouse, and the like; an output unit 907, such as various types of displays, speakers, and the like; a storage unit 908, such as a magnetic disk, an optical disk, and the like; and a communication unit 909, such as a network card, a modem, a wireless communication transceiver, and the like. The communication unit 909 allows the device 900 to exchange information/data with other devices through a computer network, such as Internet and/or various telecommunication networks.

The computing unit 901 may be various general-purpose and/or special-purpose processing components having processing and computing capabilities. Some examples of the computing unit 901 include, but are not limited to, a central processing unit (CPU), a graphics processing unit (GPU), various dedicated artificial intelligence (AI) computing chips, various computing units that run machine learning model algorithms, a digital signal processor (DSP), and any suitable processor, controller, microcontroller, and the like. The computing unit 901 performs various methods and processing described above, such as the method for generating a road edge line. For example, in some embodiments, the method for generating a road edge line may be implemented as a computer software program that is tangibly included in a machine-readable medium, such as a storage unit 908. In some embodiments, part or all of the computer program may be loaded and/or installed on the device 900 via the ROM 902 and/or the communication unit 909. When the computer program is loaded into the RAM 903 and executed by the computing unit 901, one or more steps of the method for generating a road edge line described above may be performed. Alternatively, in other embodiments, the computing unit 901 may be configured to perform the method for generating a road edge line by any other suitable means (e.g., by means of firmware).

Various embodiments of the systems and technologies described above herein may be implemented in digital electronic circuit system, integrated circuit system, Field Programmable Gate Arrays (FPGAs), Application Specific Integrated Circuits (ASICs), Application Specific Standard Products (ASSPs), Systems on a Chip (SOC), Complex Programmable Logic Devices (CPLDs), computer hardware, firmware, software, and/or combinations thereof. These various embodiments may include being implemented in one or more computer programs, which may be executed and/or interpreted on a programmable system including at least one programmable processor, which may be a dedicated or general-purpose programmable processor, which may receive data and instructions from a storage system, at least one input device, and at least one output device, and transmit data and instructions to the storage system, the at least one input device, and the at least one output device.

Program codes for implementing the method of the present invention may be written in any combination of one or more programming languages. The program codes may be provided to a processor or controller of a general-purpose computer, a special-purpose computer, or other programmable data processing apparatus, so that the program codes, when executed by the processor or controller, enable the functions/operations specified in the flowchart and/or block diagram to be implemented. The program codes may be executed completely on the machine, partially on the machine, partially on the machine and partially on the remote machine as a standalone software package, or completely on the remote machine or server.

In the context of the present invention, the machine-readable medium may be a tangible medium that may contain or store programs for use by or in combination with an instruction execution system, apparatus, or device. The machine-readable medium may be a machine-readable signal medium or a machine-readable storage medium. The machine-readable media may include, but are not limited to, electronic, magnetic, optical, electromagnetic, infrared, or semiconductor systems, devices, or devices, or any suitable combination of the above. More specific examples of machine-readable storage media may include one or more wire based electrical connections, portable computer disks, hard disks, random access memories (RAM), read-only memories (ROM), erasable programmable read-only memories (EPROM or flash memory), optical fibers, compact disk read-only memories (CD-ROM), optical storage devices, magnetic storage devices, or any suitable combination of the above.

In order to provide interaction with a user, the systems and technologies described herein may be implemented on a computer having: a display device (e.g., CRT (cathode ray tube) or LCD (liquid crystal display) monitor), configured to display information to the user; and a keyboard and a pointing device (e.g., mouse or trackball), through which the user may provide input to the computer. Other kinds of devices may also be used to provide interaction with the user, for example, the feedback provided to the user may be any form of sensory feedback (e.g., visual feedback, auditory feedback, or tactile feedback); and may receive the input from the user in any form (including acoustic input, voice input, or tactile input).

The systems and techniques described herein may be implemented in a computing system including a background component (e.g., as a data server), or a computing system including a middleware component (e.g., an application server), or a computing system including a front-end component (e.g., a user computer having a graphical user interface or a web browser through which the user can interact with embodiments of the systems and technologies described herein), or a computing system including any combination of such a background component, a middleware component, or front-end component. The components of the system may be interconnected by digital data communication (e.g., communication network) in any form or medium. Examples of communication networks include local area network (LAN), wide area network (WAN), Internet and blockchain network.

The computer system may include a client and a server. The client and the server are generally remote from each other and typically interact through a communication network. The relationship between the client and the server is generated by computer programs running on respective computers and having a client-server relationship with each other. The server can be a cloud server, also known as a cloud computing server or a cloud host, being a host product in the cloud computing service system to solve the defects of the traditional physical host and Virtual Private Server (VPS) service that are difficult to manage and weak in business expansion. The server may also be a server of a distributed system or a server combined with a blockchain.

It should be understood that steps can be reordered, added, or deleted using the various forms of processes shown above. For example, the steps described in the present invention may be performed in parallel, sequentially, or in different orders. As long as the desired results of the technical solution disclosed in the present invention can be achieved, there is no limitation herein.

The above embodiments do not limit the scope of protection of the present invention. Those skilled in the art should understand that various modifications, combinations, sub combinations and substitutions can be made according to design requirements and other factors. Any modification, equivalent replacement and improvement made within the principles of this disclosure shall be included in the scope of protection of this disclosure.

**Claims**

1. A method for generating a road edge line, comprising:

   acquiring (S101, S401, S601) a road image;
   recognizing lane line information and a segment image of an edge line from the road image;
   recognizing (S404) a key point from the segment image and determining (S405) position information of the key point as key point information; and
   generating (S 104) the road edge line according to the lane line information and the key point information.

2. The method according to claim 1, wherein the lane line information comprises lane line position information; wherein generating the road edge line according to the lane line information and the key point information, comprises:

   projecting (S406) the key point onto a lane line according to the key point information, to obtain a projection point;
   determining (S407) projection position information of the projection points from the lane line position information; and
   generating (S408) the road edge line according to the projection position information and the key point information.

3. The method according to claim 2, wherein generating the road edge line according to the projection position information and the key point information, comprises:

   obtaining position transformation information by fitting according to the projection position information and the key point information;
   processing the lane line position information according to the position transformation information, to obtain edge line position information; and
   generating the road edge line according to the edge line position information.

4. The method according to claim 3, wherein a deviation value between the key point information and the edge line position information, which is predicted based on the projection position information, the key point information and the position transformation information, is less than a deviation threshold.

5. The method according to any one of claims 2-4, wherein projecting the key point onto the lane line according to the key point information to obtain a projection point, comprises:

   vertically (S604) projecting the key point onto the lane line according to the key point information; and
   using (S605) a pixel point on the lane line obtained by the vertically projecting as the projection point.

6. The method according to any one of claims 2-5, wherein the lane line position information comprises position information of pixel points on the lane line; wherein determining projection position information of the projection points from the lane line position information, comprises:

   determining the pixel point on the lane line that matches the projection point; and
   using position information of the matched pixel point as the projection position information.

7. The method according to any one of claims 1-6, wherein recognizing the key point from the segment image, comprises:
   recognizing an image center point from the segment image, and using the image center point as the key point.

8. An apparatus (70, 80) for generating a road edge line, comprising:

an acquiring module (701, 801), configured to acquire a road image;

a first recognizing module (702, 802), configured to recognize lane line information and a segment image of an edge line from the road image;

a second recognizing module (703, 803), configured to recognize a key point from the segment image, and determine position information of the key point as key point information; and

a generating module (704, 804), configured to generate the road edge line according to the lane line information and the key point information.

9. The apparatus (70, 80) according to claim 8, wherein the lane line information comprises lane line position information; wherein the generating module (804) comprises:

a projecting sub module (8041), configured to project the key point onto the lane line according to the key point information to obtain a projection point;

a second determining sub module (8042), configured to determine projection position information of the projection point from the lane line position information; and

a generating sub module (8043), configured to generate the road edge line according to the projection position information and the key point information.

10. The apparatus (70, 80) according to claim 9, wherein the generating sub module (8043) is further configured to:

fit position transformation information according to the projection position information and the key point information;

process the lane line position information according to the position transformation information, to obtain edge line position information; and

generate the road edge line according to the edge line position information.

11. The apparatus (70, 80) according to claim 10, wherein a deviation value between the key point information and the edge line position information, which is predicted based on the projection position information, the key point information and the position transformation information, is less than a set deviation threshold.

12. The apparatus (70, 80) according to any one of claims 9-11, wherein the projecting sub module (8041) is further configured to:

vertically project the key point onto the lane line according to the key point information; and

use a pixel point on the lane line obtained by the vertically projecting as the projection point.

13. The apparatus (70, 80) according to any one of claims 9-12, wherein the lane line position information comprises position information of pixel points on the lane line; wherein the second determining sub module (8042) is further configured to:

determine the pixel point on the lane line that matches the projection point; and

use position information of the matched pixel point as the projection position information.

14. The apparatus (70, 80) according to any one of claims 8-13, wherein the second recognizing module (803) is further configured to:
recognize an image center point from the segment image, and use the image center point as the key point.

15. A computer readable storage medium, storing computer instructions, wherein the computer instructions are configured to cause a computer to implement the method of any of claims 1-7.

| | |
|---|---|
| acquiring a road image | S101 |

↓

| | |
|---|---|
| recognizing lane line information from the road image | S102 |

↓

| | |
|---|---|
| recognizing key point information related to the edge line from the road image | S103 |

↓

| | |
|---|---|
| generating the road edge line according to the lane line information and the key point information | S104 |

FIG. 1

semantic segmentation

FIG. 2

FIG. 3

| acquiring a road image | S401 |
|---|---|
| recognizing lane line information from the road image | S402 |
| recognizing a segment image of the edge line from the road image | S403 |
| recognizing a key point from the segment image | S404 |
| determining position information of the key point as key point information | S405 |
| projecting the key point onto the lane line according to the key point information, to obtain a projection point | S406 |
| determining projection position information of the projection point from the lane line position information | S407 |
| generating the road edge line according to the projection position information and the key point information | S408 |

FIG. 4

FIG. 5

acquiring a road image — S601

recognizing lane line information from the road image — S602

recognizing key point information related to the edge line from the road image — S603

vertically projecting the key point onto the lane line according to the key point information — S604

using a pixel point on the lane line obtained by vertical projection as the projection point — S605

determining projection position information of the projection point from the lane line position information — S606

fitting position transformation information according to the projection position information and the key point information — S607

processing the lane line position information according to the position transformation information, to obtain edge line position information — S608

generating the road edge line according to the edge line position information — S609

FIG. 6

road edge line generation apparatus 70

acquiring module 701

first recognizing module 702

second recognizing module 703

generating module 704

FIG. 7

road edge line generation apparatus 80

acquiring module 801

first recognizing module 802

second recognizing module 803

first recognizing sub module 8031

second recognizing sub module 8032

first determining sub module 8033

generating module 804

projecting sub module 8041

second determining sub module 8042

generating sub module 8043

FIG. 8

FIG. 9